Europäisches Patentamt

European Patent Office

Office européen des brevets

(11) Numéro de publication: **0 312 451**
**A1**

(12) **DEMANDE DE BREVET EUROPEEN**

(21) Numéro de dépôt: **88402581.8**

(22) Date de dépôt: **12.10.88**

(51) Int. Cl.⁴: **G 09 F 1/12**
**A 47 G 1/06, B 25 B 5/06,**
**B 23 D 47/04**

(30) Priorité: **13.10.87 FR 8714123**

(43) Date de publication de la demande:
**19.04.89 Bulletin 89/16**

(84) Etats contractants désignés:
**AT BE CH DE ES FR GB GR IT LI LU NL SE**

(71) Demandeur: **MODEP**
**60 rue Gaston Lauriau**
**F-93100 Montreuil sous Bois (FR)**

(72) Inventeur: **Bernard, François**
**11 Avenue de Taillebourg**
**F-75011 Paris (FR)**

(74) Mandataire: **Rinuy, Santarelli**
**14, avenue de la Grande Armée**
**F-75017 Paris (FR)**

(54) **Elément de maintien en place par pincement et cadre de maintien le comportant.**

(57) Elément (4) de maintien en place par pincement comportant une surface mobile d'appui (8) montée pivotante vis à vis d'un talon (5) grâce à une zone (12) formant charnière et destinée à presser un corps (1) contre une seconde surface d'appui (2) liée au talon, caractérisé en ce que la surface mobile d'appui est portée par une portion déformable (12) de la paroi d'un boyau (7) à section variable muni d'une valve (14) et porté par le talon, déformable entre deux configurations respectivement développée et rétractée, vers l'une desquelles il tend à revenir élastiquement.

Fig. 1

**Description**

### Elément de maintien en place par pincement et cadre de maintien le comportant.

L'invention concerne un élément de pincement, adapté notamment mais non exclusivement à la saisie d'objets plans le long de leur périphérie tels que des panneaux publicitaires ..., ainsi qu'un cadre de panneau d'exposition (affichage) comportant un tel élément de pincement.

On connait déjà des cadres de panneaux publicitaires, notamment pour des véhicules automobiles tels que des autobus, qui comportent sur quatre côtés des plaques d'appui adaptées à laquelle presser la périphérie d'un corps tel qu'une plaquette ou une feuille contre une surface fixe d'appui à est fixé ledit cadre. Deux, voire quatre, de ces côtés sont montés pivotants sur la surface d'appui à la faveur de charnières.

Pour remplacer le premier panneau disposé dans ce cadre à des fins d'exposition, il faut redresser deux, voire quatre de ces plaques d'appui, ce qui suppose deux, voire quatre, opérations de déblocage et d'ouverture. Or, du fait de l'environnement, les charnières en arrivent parfois à se coincer. D'autre part, du fait d'éventuelles dilatations, vibrations et déformations, le maintien du panneau peut s'affaiblir sand qu'il soit aisé et rapide d'y remédier. Enfin, ces charnières et les coins du cadre constituent des arêtes vives susceptibles de blesser des passants.

L'invention a pour objet de pallier à ces inconvénients grâce à un cadre de maintien facile et fiable à ouvrir, en une seule opération, qui assure un maintien continu et régulier et qui réduise les risques de dommages.

Plus généralement, l'invention vise un élément de maintien en place par pincement d'un corps contre une surface d'appui, qui soit simple et fiable dans sa fabrication et dans son fonctionnement et qui soit efficace en service malgré les aléas.

L'invention propose ainsi un élément de maintien en place par pincement comportant un surface mobile d'appui montée pivotante vis à vis d'un talon de fixation grâce à une zone formant charnière et destinée à presser un corps contre une seconde surface d'appui liée au talon, caractérisé en ce que la surface mobile d'appui est porté par la paroi d'un boyau porté par le talon et muni d'un orifice de gonflage et de dégonflage, ce boyau étant déformable par gonflage ou dégonflage entre deux configurations respectivement dévelopée et rétractée où il a respectivement une section maximale et minimale, vers l'une dequelles il tend à revenir par élasticité.

En fait un tel boyau à section variable est bien connu dans une application et avec une fonction toutes différentes de celles que vise l'invention, à savoir dans le domaine des joints gonflables d'étanchéité. Ces joints admettent une configuration rétractée de repos dans laquelle ils occupent un volume minimum et autorisent un libre débattement relatif entre deux pièces. Lorsqu' on les gonfle, ces joints occupent un volume maximum et annulent le débattement desdites pièces. On connait aussi des joints analogues rétractables, dont la rétraction est assurée par mise en dépression de leur volume interne.

En tirant parti de la force élastique disponible du fait que le boyau tende à revenir vers une configuration donnée, et de la mobilité de sa paroi résultant d'un gonflage ou d'un dégonflage, à des fins de maintien en place par pincement, l'invention relève dans certains cas de l'application nouvelle de moyens connus.

Mais l'invention ne propose pas uniquement de changer la fonction et le résultat de joints connus, elle propose également une structure nouvelle.

En effet, elle préconise que la surface mobile d'appui soit ménagée sur un membre pivotant d'appui, suffisamment rigide, rapporté à la paroi du boyau à section variable en une zone flexible formant charnière connectant une portion sensiblement rigide de la paroi, reliée au talon, avec une portion déformable adaptée, soit à se rétracter, soit à se développer spontanément par élasticité.

Un tel membre d'appui permet d'avoir un boyau relativement compact, étant donné que ce n'est pas sa paroi qui réalise directement la surface d'appui : il permet à l'extrémité de la surface d'appui opposée à la zone formant charnière d'avoir une course relativement importante pour une faible déformation de boyau, et ceci d'autant plus le membre d'appui est large par rapport au boyau.

Selon d'autres caractéristiques préférées éventuellement combinées :
- le membre pivotant d'appui est rapporté perpendiculairement à la zone formant charnière ;
- le membre pivotant d'appui est orienté parallèlement à la zone formant charnière ;
- le talon est lié rigidement à la seconde surface d'appui qui est fixe ;
- les deux surfaces d'appui sont portées par deux membres pivotants d'appui rapportés perpendiculairement à deux zones flexibles formant charnières connectant une portion sensiblement rigide de la paroi du boyau, reliée au talon, avec une portion déformable adaptée, soit à se rétracter, soit à se développer spontanément par élasticité ;
- le boyau a, en configuration dévelopée, une section interne ronde ;
- le boyau tend à revenir élastiquement en sa configuration de pincement.

L'invention propose aussi un cadre de maintien en place par pincement formé d'une pluralité de tels éléments de pincement.

De manière préférée :
- les boyaux de la pluralité d'éléments sont raccordés entre eux ;
- la pluralité d'éléments est conformée en une boucle polygonale fermée sur elle-même.

Des objets, caractéristiques et avantages de l'invention ressortent de la description qui suit, donnée à titre d'exemple non limitatif, en regard des dessins annexés sur lesquels :

    - la figure 1 est une vue en perspective avec arrachement partiel d'un panneau maintenu en place par pincement par deux éléments conformes à l'invention ;

- la figure 2 en est une vue en perspective avec arrachement partiel en configuration ouverte ;
- la figure 3 est une vue en coupe transversale d'un autre élément de maintien en place par pincement en configuration ouverte ;
- la figure 4 en est une vue en coupe transversale en configuration de pincement ;
- la figure 5 est une vue en coupe transversale d'un autre élément de pincement, selon un troisième mode de réalisation, en configuration ouverte ;
- la figure 6 en est une vue analogue en configuration de pincement ;
- la figure 7 est une vue partielle en perspective d'un cadre de maintien en place constitué d'éléments conformes aux figures 5 et 6 raccordés à angle droit ;
- la figure 8 est une vue en coupe transversale d'un quatrième mode réalisation d'élément conforme à l'invention en configuration de pincement ;
- la figure 9 en est une vue analogue en configuration ouverte ;
- la figure 10 est une vue en coupe transversale d'un cinquième mode de réalisation, très simplifié, en configuration ouverte ; et
- la figure 11 en est une vue analogue en configuration de pincement.

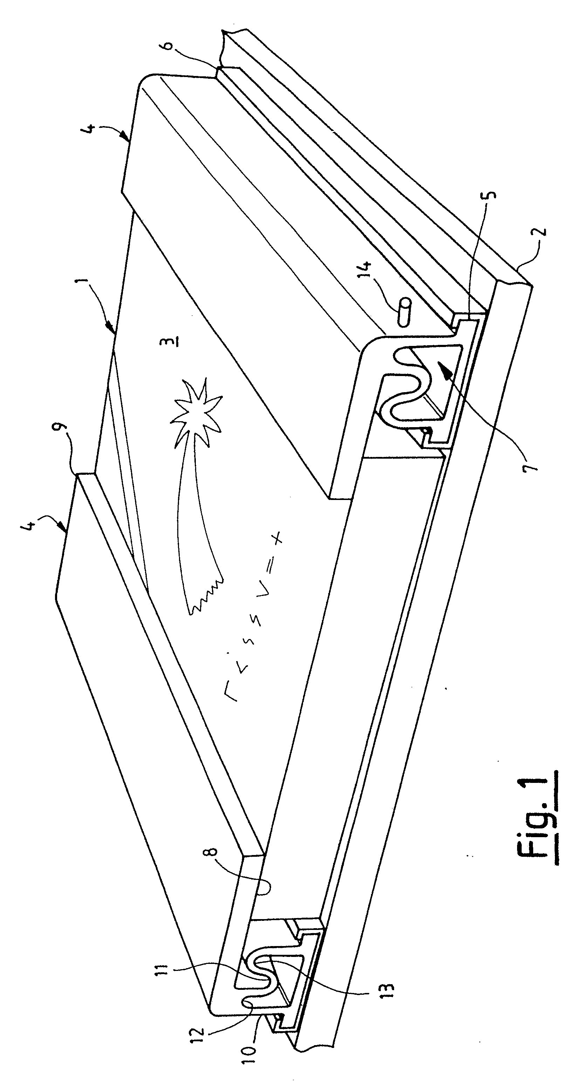

La figure 1 représente une plaque 1, sur laquelle est par exemple collée une affiche publicitaire 3, maintenue en place contre une surface fixe d'appui 2 par deux éléments 4 de maintien en place par pincement, disposés en regard et formant conjointement un cadre discontinu de maintien en place par pincement de la plaque 1.

Chaque élément 4, par exemple entièrement réalisé en élastomère, comporte un talon 5 lié à la surface fixe d'appui par des cornières 6, un boyau 7 à section déformable variable et une surface mobile d'appui 8 ménagée sur un membre pivotant d'appui 9 raccordé à la paroi du boyau 7.

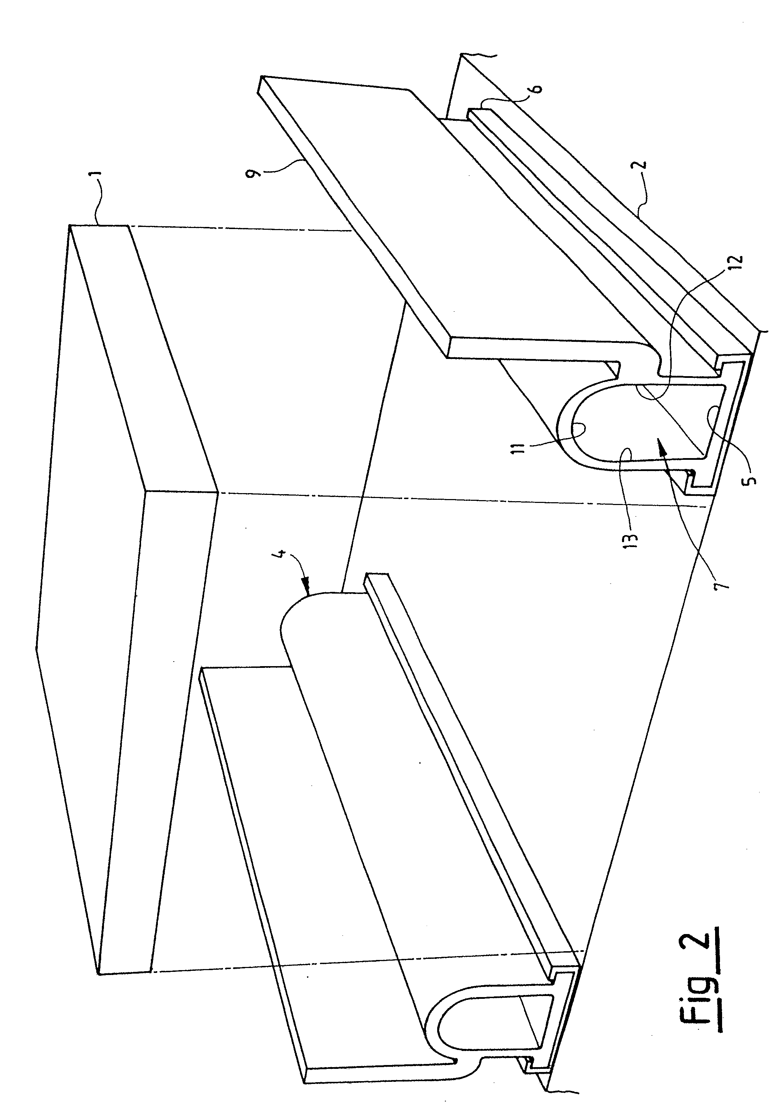

Le boyau 7 est déformable entre deux configurations extrêmes respectivement développée (figure 2) et rétractée (figure 1) vers l'une desquelles il tend à revenir élastiquement.

La paroi de ce boyau comporte une portion sensiblement rigide 10 de laquelle le talon est solidaire et une portion déformable 11, appelée membrane ou diaphragme. Ces portions 10 et 11 se raccordent longitudinalement par des zones flexibles allongées 12 et 13 formant charnières qui sont, soit conformées en U (figure 1) soit sensiblement planes (figure 2).

Le membre pivotant d'appui 9 est rapporté au boyau 7 en l'une 12 des zones formant charnières en sorte d'être sensiblement parallèle à la surface fixe d'appui en configuration rétractée du boyau.

La configuration de repos vers laquelle le boyau 7 tend à revenir spontanément de par son élasticité propre est ici la configuration rétractée dans laquelle les zones formant charnières 12 et 13 et la portion déformable de paroi 10 définissent des inflexions.

Le boyau 7 est muni d'une valve ou d'un orifice de gonflage et de dégonflage 14 auquel peut être raccordée une tubulure non représentée par l'intermédiaire de laquelle une surpression peut être injectée. Dans ce cas les zones 12 et 13 formant charnières se déploient à l'encontre de leur élasticité et font pivoter en conséquence le membre d'appui 9, ce qui libère le panneau 1.

Les zones 12 et 13 restent déployées tant que la surpression est maintenue mais reviennent en leur configuration repliée dès que celle-ci est supprimée en faisant appliquer par la membre d'appui 9, du fait de leur élasticité, une pression régulière sur le panneau de remplacement qui aura été mis en place.

Si, comme cela est représenté aux figures 1 et 2, les éléments 4 en regard sont indépendants, il faut deux opérations de mise en surpression pour libérer le panneau 1.

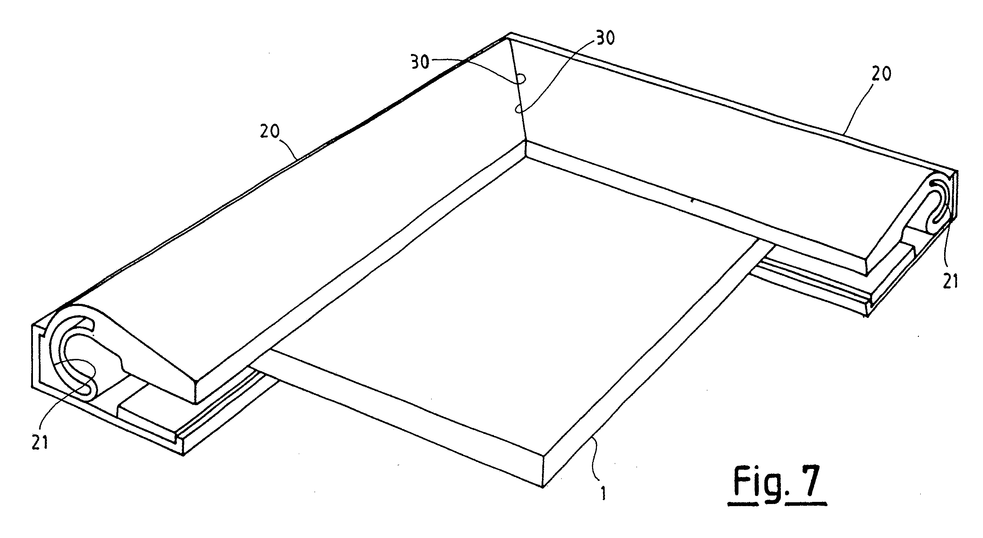

Si, par contre, comme cela est représenté partiellement à la figure 7, les boyaux des éléments sont raccordés en une boucle polygonale, il suffit d'une seule manoeuvre en surpression. Il faut bien sûr que les membres d'appui de chaque élément linéaire soient disjoints de manière à pouvoir pivoter autour de leurs zones respectives formant charnières : leurs tranches sont à cet effet avantageusement conformées en biseau.

De tels éléments 4 de maintien en place par pincement présentent des avantages substantiels par rapport aux solutions connues :

- on gagne un temps considérable du fait que le déblocage et l'ouverture de ces éléments, et leur fermeture et leur blocage se font respectivement en une seule opération ;
- le fonctionnement offre une grande fiabilité puisqu'il n'y a pas de pièces mécaniques en mouvement ;
- le boyau peut être, en configuration rétractée, moins épais que les cornières articulées de l'art antérieur ;
- du fait de l'élasticité du boyau cet élément 4 maintient le pincement du panneau 1 même en cas de vibrations, de dilatations ou de déformations de la surface d'appui 2 ; cela se révèle fortement avantageux lorsque cette surface d'appui est portée par un véhicule tel qu'un autobus ;
- cet élément offre une grande sécurité du fait de l'absence d'arête coupante ;
- enfin, le fait que l'élement soit en caoutchouc ou en élastomère le rend insensible à la corrosion, notamment de type électrolytique qui constitue un facteur de vieillissement important des éléments de maintien connus à ce jour (acier/aluminium).

En variante non représentée le talon 5 est fixé sur la surface d'appui par des étriers ou autres éléments de fixation.

Pour éviter des vols de plaques la valve ou l'orifice de gonflage peut être ménagée au travers du talon 5 et de la surface d'appui 2.

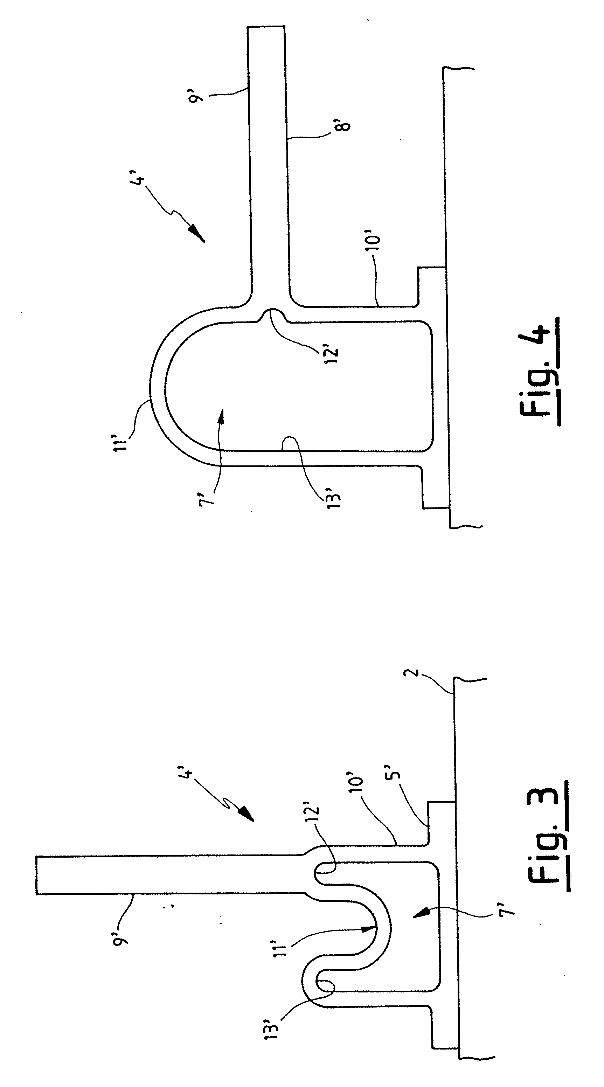

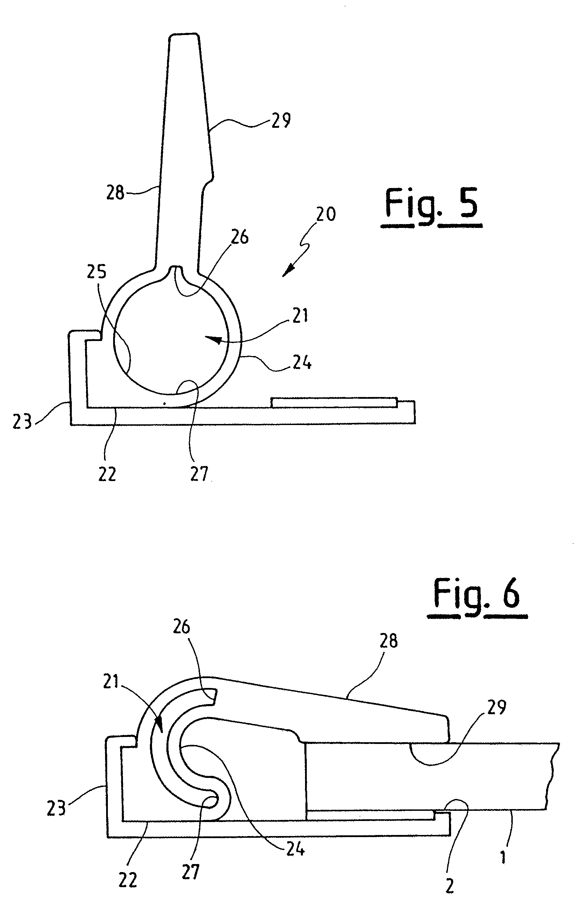

Les figures 3 et 4 illustrent une variante de réalisation dans laquelle les membres d'appui 9' des éléments 4' sont rapportés à l'une 12' des zones formant charnières non plus parallèlement mais perpendiculairement à celle-ci.

Les divers composants de cet élément 4' comportent ici un indice "prime" pour les distinguer de ceux de l'élément 4.

Cette disposition peut être préférée si l'on n'a besoin de maintenir la plaque 1 que de façon temporaire et/ou avec une force de pincement importante, par exemple à des fins de découpe de la plaque 1, ou d'usinage de celle-ci sur une machine-outil. Les éléments 4 peuvent être alors de courtes pattes de maintien.

Cette disposition trouve également son intérêt lorsque le joint 7' tend normalement à revenir élastiquement en sa configuration développée, et non plus rétractée comme aux figures 1 et 2.

Les figures 5 et 6 représentent un autre élément 20 de maintien en place par pincement dont le boyau 21 a, en configuration développée, une section interne ronde et, en configuration rétractée, une section semi-circulaire. La talon associé 22 est ici disposé latéralement d'un seul côté et est emprisonné par une gouttière 23. Le boyau 21 comporte ici encore une membrane déformable 24 raccordée à une portion rigide 25 par des zones 26 et 27 formant charnières, à l'une 26 desquelles est rapporté perpendiculairement un membre d'appui 28 présentant une surface mobile d'appui 29.

A la figure 7 est représentée une plaque 1 maintenue par deux éléments 20 dont les boyaux 21 sont raccordés à angle droit tandis que les tranches en regard 30 de leurs membres d'appui sont en biseau. Ces éléments forment conjointement une partie de boucle polygonale à boyau fermé sur lui-même.

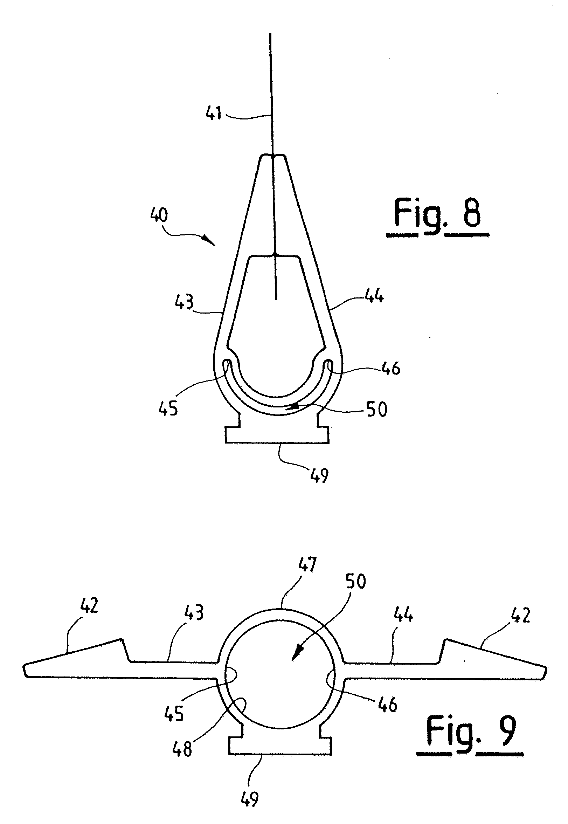

Les figures 8 et 9 illustrent un autre type d'élément de maintien en place par pincement. Il s'agit d'une véritable pince pneumatique 40, par exemple pour la saisie d'une feuille 41. Il n'y a plus de surface fixe d'appui mais deux surfaces mobiles 42 ménagées sur deux membres pivotants 43 et 44 raccordés perpendiculairement à des zones flexibles 45 et 46 formant charnières entre une membrane déformable 47 et une paroi rigide 48 liée à un talon 49. Le boyau 50 a ici aussi, en configuration développée, une section interne ronde.

Une telle pince, simple, fiable, économique, permet un contrôle plus progressif de la pression de pincement que dans les pinces mécaniques connues. Elle peut constituer par exemple une main d'un manipulateur ou d'un robot.

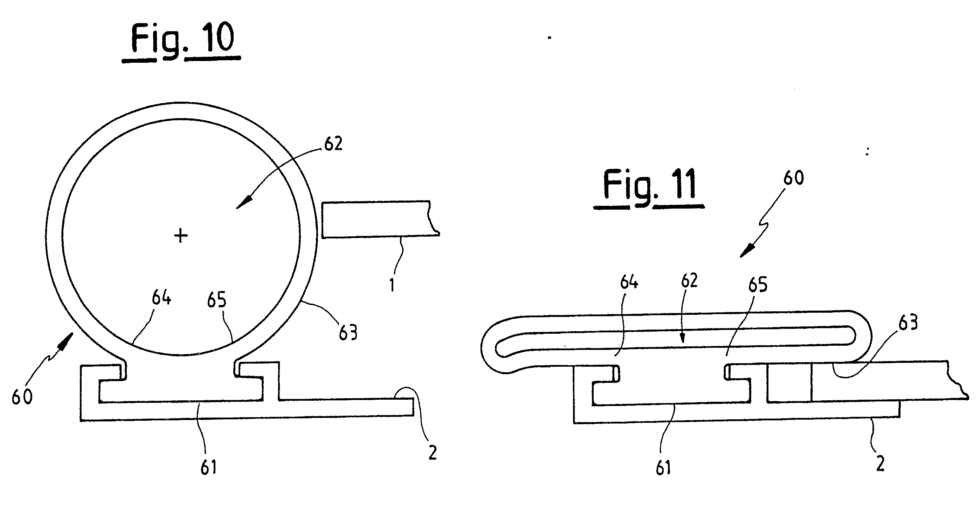

Dans la version très simplifiée des figures 10 et 11, un élément 60 de maintien en place par pincement comprend un talon 61 et un boyau 62 à section variable qui peut s'aplatir complètement du fait que sa paroi est pratiquement partout déformable. Une surface d'appui 63 est ici ménagée sur une portion même de la paroi de ce boyau, entre le talon et l'une des deux zones flexibles 64 et 65 formant charnières.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Elément (4, 4', 20, 40, 60) de maintien en place par pincement comportant une surface mobile d'appui (8, 8', 29, 42, 63) montée pivotante vis à vis d'un talon de fixation (5, 5', 22, 49, 61) grâce à une zone (12, 12', 26, 45, 46, 64, 65) formant charnière et destinée à presser un corps (1, 41) contre une seconde surface d'appui (2, 42) liée au talon, caractérisé en ce que la surface mobile d'appui est portée par la paroi d'un boyau (7, 7', 21, 50, 62) porté par le talon et muni d'un orifice (14) de gonflage et de dégonflage, ce boyau étant déformable par gonflage ou dégonflage entre deux configurations respectivement développée et rétractée où il a respectivement une section maximale et minimale, vers l'une desquelles il tend à revenir par élasticité.

2. Elément selon la revendication 1, caractérisé en ce qu'il comporte un membre pivotant d'appui (9, 9', 28, 43, 44) portant ladite surface mobile d'appui, rapporté à une zone flexible (12, 12', 26, 45, 46, 64, 65) formant charnière connectant une portion sensiblement rigide de la paroi du boyau, reliée au talon, avec une portion déformable (11, 11', 24, 47) adaptée, soit à se rétracter, soit à se développer spontanément par élasticité.

3. Elément selon la revendication 2, caractérisé en ce que le membre pivotant d'appui (9', 28, 43,44) est rapporté perpendiculairement à la zone formant charnière.

4. Elément selon la revendication 2, caractérisé en ce que le membre pivotant d'appui (9) est orienté parallèlement à la zone (12) formant charnière.

5. Elément selon l'une quelconque des revendications 1 à 4, caractérisé en ce que le talon (5, 5', 22,61) est lié rigidement à la seconde surface d'appui (2) qui est fixe.

6. Elément selon l'une quelconque des revendications 1 à 4, caractérisé en ce que les deux surfaces d'appui (42) sont portées par deux membres pivotants d'appui (43, 44) rapportés perpendiculairement aux deux zones flexibles (45, 46) formant charnières connectant une portion (47) sensiblement rigide de la paroi du boyau, reliée au talon, avec une portion (48) déformable adaptée, soit à se rétracter, soit à se développer spontanément par élasticité.

7. Elément selon l'une quelconque des revendications 1 à 6, caractérisé en ce que le boyau tend à revenir élastiquement dans une configuration de pincement.

8. Cadre de maintien en place par pincement d'une plaque, formé d'une pluralité d'éléments selon l'une quelconque des revendications 1 à 7.

9. Cadre selon la revendication 8, caractérisé en ce que les boyaux de la pluralité d'éléments sont raccordés entre eux.

10. Cadre selon l'une quelconque des revendications 8 ou 9, caractérisé en ce que la pluralité d'éléments est conformée en une boucle polygonale fermée sur elle-même.

Fig. 1

EP 0 312 451 A1

Fig 2

Fig. 4

Fig. 3

_Fig. 5_

_Fig. 6_

EP 0 312 451 A1

Fig. 7

Fig. 8

Fig. 9

**Fig. 10**

**Fig. 11**

Office européen
des brevets

**RAPPORT DE RECHERCHE EUROPEENNE**

Numero de la demande

EP 88 40 2581

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 202 061 (LOWELL B. JOHNSTON) * Colonne 1, lignes 55-72; colonne 2, lignes 1-41; figures 1-3 * | 1 | G 09 F 1/12 A 47 G 1/06 B 25 B 5/06 B 23 D 47/04 |
| A | | 2-4,6 | |
| Y | FR-A-2 533 728 (MARKETING DISPLAYS S.A.) * Page 4, lignes 27-37; page 5, lignes 1-33; figures 3,4 * | 1 | |
| A | | 5,8,11 | |
| A | GB-A-2 170 126 (FESTO-MASCHINENFABRIK) * Page 2, lignes 11-14,43-95; figures 3a,3b,13,14 * | 1-4 | |
| A | US-E- 28 663 (J.I. BAER) * Colonne 2, lignes 56-59; colonne 3, lignes 1-5; figures 1,2 * | 1,6 | |

| DOMAINES TECHNIQUES RECHERCHES (Int. Cl.4) |
|---|
| F 16 B B 23 D A 47 G B 25 B B 25 J |

Le présent rapport a été établi pour toutes les revendications

| Lieu de la recherche | Date d'achèvement de la recherche | Examinateur |
|---|---|---|
| LA HAYE | 09-12-1988 | ARESO Y SALINAS J. |